# FASCICULE DE BREVET EUROPEEN

(11) **EP 3 894 239 B1**
(45) Date de publication et mention de la délivrance du brevet: **21.06.2023**
(21) Numéro de dépôt: 19872276.1
(22) Date de dépôt: 05.12.2019
(51) Int. Cl.: B60C 13/00

(54) **PNEUMATIQUE POURVU D'UN MARQUAGE COLORE ET D'UNE TEXTURE SUR UN FLANC**
MIT EINER FARBIGEN MARKIERUNG UND MIT EINER TEXTUR AUF EINER FLANKE VERSEHENER REIFEN
TYRE PROVIDED WITH A COLOURED MARKING AND WITH A TEXTURE ON A SIDEWALL

(30) Priorité: 11.12.2018 FR 1872674
(43) Date de publication de la demande: 20.10.2021
(73) Titulaire: COMPAGNIE GENERALE DES ETABLISSEMENTS MICHELIN, 63000 Clermont-Ferrand (FR)
(72) Inventeur: MUHLHOFF, Olivier, 63040 CLERMONT-FERRAND Cedex 9 (FR); DJABOUR, Walid, 63040 CLERMONT-FERRAND Cedex 9 (FR); POULBOT, Valéry, 63040 CLERMONT-FERRAND Cedex 9 (FR)
(74) Mandataire: Millanvois, Patrick Jacques Jean
(86) Numéro de dépôt international: PCT/FR2019/052938
(87) Numéro de publication internationale: WO 2020/120880

(56) Documents cités:
- EP-A2- 0 691 223
- WO-A1-2013/113526
- WO-A1-2016/000985
- FR-A1- 2 751 920
- JP-A- 2014 019 367
- US-A- 1 989 703

## Description

### Domaine technique

La présente invention concerne les domaines des pneumatiques pour véhicules. Plus particulièrement, l'invention concerne un pneumatique présentant, sur au moins un de ses flancs, une zone texturée et un marquage coloré associé à cette zone texturée.

### Technique antérieure

Un pneumatique présente une grande quantité de marquages destinés à donner des informations techniques, légales ou à permettre aux consommateurs de distinguer la marque du produit, ou encore à donner des informations pour l'identification de stock, d'un numéro de série individuel, etc.

Par ailleurs, les marquages peuvent être aussi utilisés pour donner un aspect original au pneumatique, ou encore pour masquer des déformations locales générées lors de la fabrication du pneumatique et pouvant être visibles au niveau des flancs, notamment sous certaines conditions d'éclairage.

De tels marquages peuvent par exemple être colorés et apposés sur le flanc du pneumatique. Il est notamment possible de réaliser ces marquages colorés par apposition d'autocollants ou « stickers ». Il est ainsi possible d'obtenir de tels marquages colorés par impression par jet d'encre ou encore par dépose d'une couche de peinture après vulcanisation du pneumatique. Pour plus de détails, on pourra par exemple se référer au brevet US 5,015,505 A qui traite d'une telle dépose de couche de peinture sur le flanc du pneumatique.

Dans le cas de marquages colorés apposés sur le flanc d'un pneumatique, il peut se poser des problèmes de pérennité du marquage notamment du fait de frottements avec des trottoirs ou du fait de déformation élastique du flanc pouvant générer des craquelures sur ledit marquage ou un décollement de celui-ci.

Le document EP2647509 A1 divulgue un pneumatique comportant sur un flanc un marquage coloré. Ce marquage coloré est divisé en une pluralité de motifs globalement identiques espacés les uns des autres. Ce sont les espaces qui vont absorber les déformations élastiques, évitant ainsi la génération de fissures non maîtrisées dans le marquage. Cependant, la réalisation d'un marquage coloré comportant une pluralité de motifs nécessite de mettre en place des stratégies d'impression plus complexes. Les tolérances de fabrication inhérentes au procédé rendent difficile leur réalisation pratique, notamment quand le marquage coloré comporte plusieurs couches superposées ou de couleurs différentes. Les documents US 1989703 A, EP 0691223 A2 et JP 2014 019367 A décrivent des marquages colorés superposés avec des stries. Le document FR 2751920 A1 divulgue une décalcomanie déposée sur un relief strié.

Il existe donc un besoin d'obtenir un motif coloré sur un flanc de pneumatique présentant une plus grande pérennité avec un coût de fabrication moindre.

### Exposé de l'invention

La présente invention vise à remédier à cet inconvénient.

Plus particulièrement, la présente invention vise à améliorer la pérennité des marquages colorés tout en limitant le coût de fabrication d'un tel marquage.

L'invention concerne un pneumatique en matériau caoutchoutique comprenant une bande de roulement et deux flancs délimitant ladite bande de roulement. Au moins un desdits flancs comporte une zone texturée venue de matière avec ce flanc et faisant contraste avec le reste de ce flanc. Le flanc comporte également un marquage coloré.

Selon une caractéristique générale de l'invention, le marquage coloré s'étend sur le flanc du pneumatique, au moins en partie, dans la zone texturée. En outre la texture comprend une pluralité d'éléments en protubérance par rapport à un fond de flanc et tout ou partie des éléments en protubérance de la texture sont des brins répartis dans la texture selon une densité au moins égale à un brin par millimètre carré (mm²), chaque brin ayant une section moyenne comprise entre 0,0005 mm² et 1 mm²

Par « pneumatique », on entend tous les types de bandages élastiques soumis à une pression interne ou non.

Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule. La bande de roulement comprend une pluralité de découpures (incisions, rainures) se prolongeant en direction des surfaces latérales.

Par « flanc » d'un pneumatique, on entend une partie de la surface latérale du pneumatique disposée entre la bande de roulement dudit pneumatique et un bourrelet de ce pneumatique. Le flanc débute à partir des extrémités de découpures de la bande de roulement et se prolonge jusqu'au bourrelet.

Par « bourrelet » d'un pneumatique, on entend une partie du pneumatique destinée à prendre assise sur une jante de roue.

Par « zone texturée » du flanc, on entend une zone de ce flanc comportant un agencement organisé d'une pluralité d'éléments, tout ou partie des éléments de l'agencement étant la répétition d'un même élément de base.

Par « zone texturée venue de matière avec le flanc », on entend que les éléments de la texture sont dans le même matériau caoutchoutique que le flanc.

Par « marquage coloré », on entend toute information technique, légale à destination du consommateur ou d'autres personnes, présentant au moins une couleur. Le terme « couleur » est entendu ici comme excluant la couleur noire, c'est-à-dire toutes les couleurs y compris le blanc. Autrement dit, le marquage présente au moins une couleur qui est différente de la couleur noire du matériau caoutchoutique du pneumatique.

Le marquage coloré vient ainsi se superposer à la texture. Cette texture possède une certaine liberté de mouvements par rapport au flanc. Le motif coloré est alors découplé, au moins en partie, vis-à-vis des déformations élastiques dudit flanc. Lorsque le flanc du pneu se déforme, les contraintes à l'interface gomme-motif coloré sont plus faibles, le risque de décollement ou de fissuration du motif coloré est alors diminué également.

Avantageusement, le marquage coloré s'étend sur le flanc du pneumatique, uniquement dans la zone texturée. La mise en valeur du motif coloré sur le flanc du pneumatique est améliorée.

Selon une première conception, le marquage coloré reste à la surface de la zone texturée. Le découplage entre le motif coloré et le flanc du pneumatique est alors maximal et le motif coloré est moins soumis aux effets des déformations élastiques du flanc. Dans ce mode de réalisation, le marquage coloré est, par exemple, un autocollant (« sticker », en anglais) ou un film de couleur.

Selon une seconde conception, le marquage coloré pénètre dans la zone texturée ce qui permet une meilleure accroche de ce marquage coloré sur le flanc du pneumatique. Dans ce mode de réalisation, le marquage coloré est réalisé, par exemple, par une dépose d'une peinture sur le flanc.

Selon l'invention, la texture comprend une pluralité d'éléments en protubérance par rapport à un fond de flanc. En fonction du type de couche colorée, ces éléments en protubérance permettent de soutenir ladite couche colorée ou ces éléments en protubérance favorisent la pénétration de cette couche colorée dans la texture.

Selon l'invention, tout ou partie des éléments en protubérance de la texture sont des brins répartis dans la texture selon une densité au moins égale à un brin par millimètre carré (mm²), chaque brin ayant une section moyenne comprise entre 0,0005 mm² et 1 mm².

Dans une variante de réalisation, partie des éléments en protubérance de la texture sont des lamelles sensiblement parallèlles entre elles, le pas des lamelles dans la texture étant au plus égal à 0,5 mm, chaque lamelle ayant une largeur moyenne comprise entre 0,02 mm et 0,25 mm.

Dans une autre variante de réalisation, partie des éléments en protubérance de la texture sont des parallélépipèdes dont la longueur est comprise entre 0,05 mm et 0,5 mm, de hauteur comprise entre 0,05 mm et 0,5 mm, la distance entre deux parallélépipèdes adjacents dans la texture étant comprise entre 0,05 mm et 0,5 mm.

La présente invention sera mieux comprise à la lecture de la description détaillée de modes de réalisation pris à titre d'exemples nullement limitatifs et illustrés par les dessins annexés sur lesquels :
- [Fig 1] la figure 1 est une vue schématique en perspective représentant une partie du flanc comprenant une texture et un motif coloré selon l'invention ;
- **[****Fig 2****]** la figure 2 est une vue du flanc de la figure 1 selon une coupe A-A, selon un premier mode de réalisation ;
- **[****Fig 3****]** la figure 3 est une vue du flanc de la figure 1 selon une coupe A-A, selon un second mode de réalisation ;
- **[****Fig 4****]** la figure 4 est une vue schématique en perspective représentant une partie de la texture du flanc de pneumatique de la figure 1 selon une première variante ;
- **[****Fig 5****]** la figure 5 est une vue schématique en perspective représentant une partie de la texture du flanc de pneumatique de la figure 1 selon une seconde variante ;
- **[****Fig 6****]** la figure 6 est une vue schématique en perspective représentant une partie de la texture du flanc de pneumatique de la figure 1 selon une troisième variante.

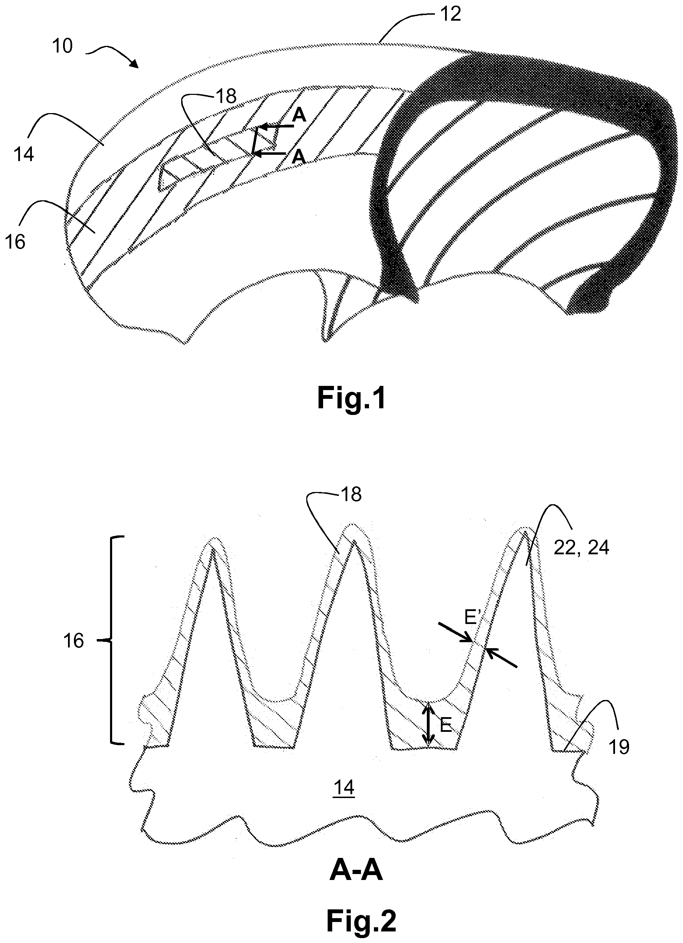

Sur la figure 1 est représenté schématiquement un pneumatique 10 comprenant une bande de roulement 12 et des flancs 14 entourant de part et d'autre la bande de roulement, un seul étant visible sur la figure. La bande de roulement 12 comprend une surface de roulement destinée à venir en contact avec une chaussée lorsque le pneumatique roule. La bande de roulement comprend une pluralité de découpures (incisions, rainures), non visibles sur la figure 1. Le pneumatique 10 est destiné à être monté sur une jante d'un véhicule automobile.

Le flanc 14 comprend une zone texturée 16 et un marquage coloré 18. La zone texturée 16 et le marquage coloré 18 sont respectivement représentées avec des hachures dont les orientations sont différentes. Le marquage coloré 18 s'étend ainsi sur le flanc du pneumatique sur au moins une partie de la zone texturée 16. Il est ainsi possible que le marquage coloré 18 s'étendent à la fois sur la zone texturée 16 et sur une partie du flanc 14 entourant cette zone texturée. Dans le mode de réalisation de la figure 1, le marquage coloré 18 est entièrement contenu dans la zone texturée 16. Ce marquage coloré 18 s'étend ainsi sur le flanc 14 du pneumatique 10 uniquement dans la zone texturée 16. Il peut être disposé centralement dans la zone texturée 16. En variante, il peut être décalé et être plus proche d'une des limites de la zone texturée 16.

Plus particulièrement, dans l'exemple de réalisation illustré, la zone texturée 16 forme sur la partie du flanc 14 une surface globalement annulaire centrée sur l'axe de rotation du pneumatique. Cette surface globalement annulaire peut s'étendre sur toute la surface du flanc en formant un anneau continu. Sur la figure 1, la zone texturée comprend et s'étend le long d'une zone de largeur maximale du flanc. Par « zone de largeur maximale du flanc », on entend l'ensemble des points de ce flanc qui sont le plus axialement extérieur. Dit autrement, chaque point de cette zone de largeur maximale est selon une vue en coupe méridienne, à la plus grande distance d'un plan équatorial, distance mesurée selon une direction axiale, le pneumatique étant monté et gonflé sur une jante recommandée par l'ETRTO. Alternativement, il est possible de prévoir que la zone texturée 16 soit uniquement au-dessous ou en dessous de cette zone de largeur maximale du flanc.

La zone texturée 16 comprend une pluralité d'éléments en protubérance 22, 24, 26. Ces éléments en protubérance 22, 24, 26 sont venus de matière avec le flanc 14. La zone texturée 16 est donc dans le même matériau caoutchoutique que le flanc 14. La zone texturée 16 vise à piéger une grande partie des rayons lumineux incidents qui rencontrent ladite texture, c'est-à-dire limiter le nombre de rayons lumineux renvoyés à l'extérieur. Ceci permet de donner un aspect plus noir à la zone texturée 16 par rapport au reste du flanc 14 et du marquage coloré 18 du pneumatique, ce qui fait ressortir ce marquage coloré 18.

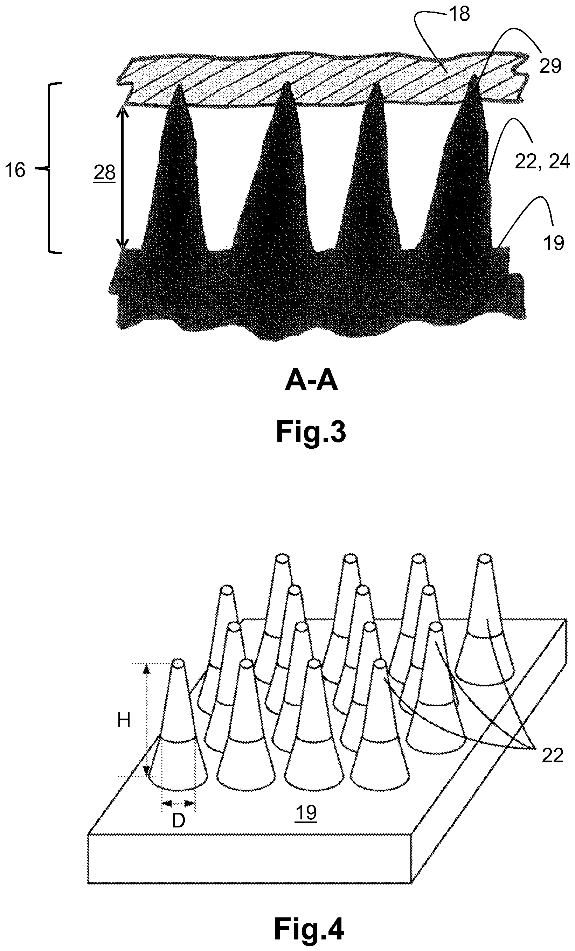

La zone texturée 16 va maintenant être décrite selon différents modes de réalisation non limitatifs. Selon un premier mode de réalisation illustré à la figure 4, la zone texturée 16 comprend une pluralité de brins 22 s'étendant en saillie à partir d'un fond de flanc 19. Le fond de flanc 19 est une zone encastrée dans le flanc 14, c'est-à-dire une zone décalée par rapport à la surface externe du flanc qui est visible par un observateur extérieur. En variante, le fond de flanc 19 et la surface externe du flanc sont en partie confondus et la zone texturée 16 s'étend au-dessus du flanc 14. Les brins 22 sont ici régulièrement répartis sous forme de rangées successives. Les brins 22 peuvent par exemple être répartis selon une densité au moins égale à un brin par millimètre carré (mm²), chaque brin 22 ayant une section moyenne S comprise entre 0,0005 mm² et 1 mm². Les brins 22 ont une forme globalement conique avec une section diminuant le long de leur hauteur H. La hauteur H des brins 22 est supérieure ou égale à 0,1 mm.

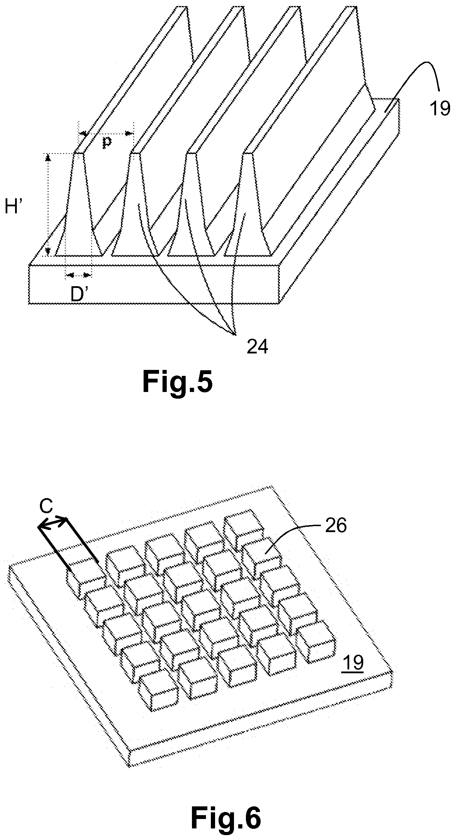

En variante, la zone texturée 16 peut comprendre d'autres types d'éléments en protubérance que les brins 22. Dans un deuxième mode de réalisation illustré à la figure 5, la zone texturée 16 comprend des lamelles 24 en saillie à partir du fond de flanc 19 qui sont sensiblement parallèles entre elles. Le pas P des lamelles 24 dans la zone texturée 16 peut par exemple être compris entre 0,1 mm et 0,5 mm, chaque lamelle 24 ayant une largeur moyenne comprise entre 0,02 mm et 0,25 mm et une hauteur H' comprise entre 0,05 mm et 0,5 mm.

Dans un troisième mode de réalisation de la texture illustré à la figure 6, les éléments en protubérance de celle-ci sont réalisés sous la forme de parallélépipèdes 26 dont la longueur du côté C peut être comprise entre 0,05 mm et 0,5 mm et la hauteur peut être comprise entre 0,05 mm et 0,5 mm. La distance séparant deux parallélépipèdes 26 adjacents peut être comprise entre 0,05 mm et 0,5 mm.

Dans les trois modes de réalisation décrits précédemment, les éléments en protubérance 22, 24, 26 de la zone texturée 16 présentent un espacement régulier et des formes identiques. Alternativement, il est possible de prévoir une zone texturée 16 dans laquelle les éléments en protubérance 22, 24, 26 sont répartis dans celle-ci de manière non-ordonnée, et/ou présentent des formes variables et/ou des hauteurs variables. La zone texturée 16 peut ainsi comporter une combinaison de brins 22, de lamelles 24 et de parallélépipèdes 26.

Comme indiqué précédemment, la zone texturée 16 peut se présenter sur le flanc 14 du pneumatique 10 sous la forme d'un anneau continu. En variante, il est possible de prévoir d'autres agencements. La zone texturée 16 peut par exemple être discontinue dans le sens circonférentiel. Dans ce cas, la zone texturée peut être composée d'une pluralité de motifs qui sont espacés les uns aux autres sur le flanc dans le sens circonférentiel et/ou dans le sens radial. Les zones texturées peuvent présenter une forme identique ou des formes différentes. Les zones texturées peuvent par exemple présenter des formes carrées, hexagonales, rectangulaires ou encore en forme de parallélogramme.

Le flanc 14 comporte également le marquage coloré 18. Sur la figure 1, le marquage coloré 18 est représenté sous la forme d'une zone hachurée globalement rectangulaire. En variante, il est possible de prévoir d'autres agencements. Par exemple, le marquage coloré 18 peut comporter plusieurs motifs qui sont espacés les uns aux autres sur le flanc dans le sens circonférentiel et/ou dans le sens radial. Ces motifs peuvent présenter une forme identique ou des formes différentes. Les motifs du marquage coloré 18 peuvent par exemple présenter des formes carrées, hexagonales, rectangulaires ou encore en forme de parallélogramme.

Le marquage coloré 18 présente au moins une couleur qui est différente de la couleur noire du matériau caoutchoutique du pneumatique. Le marquage coloré 18 peut ainsi présenter plusieurs couleurs.

Le marquage coloré 18 présente une luminosité dite première luminosité L*1 et la zone texturée 16 présente une luminosité dite deuxième luminosité L*2 qui est inférieure à la luminosité L*1. De préférence, la luminosité L*1 du marquage est supérieure à la luminosité L*2 de la zone texturée d'au moins 15 unités de luminosité. La luminosité L*1 est par exemple supérieure ou égale à 30, et de préférence supérieure ou égale à 40. La luminosité L*2 est par exemple inférieure ou égale à 15 et supérieure ou égale à 5.

Le reste du flanc 14 non marqué et non texturé présente une luminosité dite troisième luminosité L*3 supérieure d'au moins 5 unités de luminosité à la luminosité L*2 de la zone texturée 16. La luminosité L*3 dudit reste du flanc non texturé et non marqué est par exemple supérieure ou égale à 15, et inférieure ou égale à 35.

L'appareil de mesure de la luminosité approprié est un spectrocolorimètre CM 700D de la marque KONICA-MINOLTA. Cet appareil est adapté pour mesurer :
- la luminosité L*1 à L*3 du marquage coloré 18, de la zone texturée 16 et du reste du flanc 14,
- une composante a* qui définit une première nuance de couleur entre le rouge et le vert,
- une composante b* qui définit une deuxième nuance de couleur entre le jaune et le bleu.

On positionne l'appareil sur la partie du flanc 14 du pneumatique que l'on veut mesurer et qui donne ensuite les valeurs des trois paramètres L*, a*, b*. Ces mesures sont effectuées avec le mode « SCI » (Mode de réflexion spéculaire incluse) paramétré à un angle de 10° et un réglage de lumière de type D65 (réglage défini selon la Commission Internationale de l'Eclairage, CIE). Grâce à cet appareil, on quantifie la luminosité du marquage coloré 18, de la zone texturée 16 et du reste du flanc 14 non marqué et non texturé.

Les figures 2 et 3 présentent différentes réalisations de marquage coloré 18 sur la zone texturée 16. La figure 2 représente ainsi vue en coupe selon la ligne A-A de la figure 1, un premier type de marquage coloré dans lequel ce marquage coloré 18 pénètre dans la zone texturée 16 jusqu'à atteindre le fond 19 de flanc. Une partie des protubérances de la zone texturée 16, est recouverte par le marquage coloré à la fois dans la hauteur de ces protubérances et dans le fond 19. Dans le mode de réalisation de la figure 2, la répartition du marquage coloré 18 est inégale dans la zone texturée 16. Ainsi, ce marquage coloré 18 présente dans le fond 19 de flanc une épaisseur E supérieure a une épaisseur E' présente le long des protubérances. On assure ainsi un maintien plus important du marquage coloré au niveau du fond 19 de flanc, celui-ci étant en outre protégé par les protubérances de la zone texturée 16. La protection du marquage coloré 18 est améliorée ce qui lui confère une plus grande pérennité. Ce premier type de marquage coloré est réalisé, par exemple, par la dépose d'une peinture sur le flanc du pneumatique qui va venir pénétrer dans la zone texturée 16. La peinture est par exemple déposée par impression couleur à l'aide d'au moins une tête d'impression. Cette étape de réalisation du marquage est effectuée après une étape de vulcanisation du pneumatique.

De préférence, la zone texturée 16 est obtenue lors de l'étape de vulcanisation du pneumatique dans le moule. On évite ainsi de devoir réaliser, après la cuisson du pneumatique, une étape supplémentaire pour rendre particulièrement visible le marquage. Alternativement, il reste cependant possible de réaliser cette texture, après l'étape de vulcanisation, par usinage ou gravure au laser ou encore par moletage.

Dans un mode de mise en oeuvre particulier, le procédé peut comprendre, en outre, avant l'étape de réalisation dudit marquage, une étape de détermination de la position de ladite texture et du reste du flanc non texturé et une étape de positionnement de la tête d'impression par rapport au flanc en fonction de la position déterminée de la texture. La détermination de la position de la texture sur le flanc peut être par exemple réalisée à l'aide d'un spectro-colorimètre.

Dans le mode de réalisation de la figure 3, le marquage coloré 18 reste à la surface de la zone texturée 16. Par « rester à la surface de la zone texturée », on entend que le marquage coloré 18 est porté par les parties supérieures 29 des protubérances 24. Il existe alors un espace libre 28 entre le marquage coloré 18 et le fond 19 de flanc. Le marquage coloré 18 est ainsi découplé, au moins en partie, vis-à-vis des déformations élastiques du flanc, la texture possédant une certaine liberté de mouvements par rapport au flanc. Ce second type de marquage coloré 18 est réalisé, par exemple, à l'aide d'un autocollant, d'un film de couleur ou d'un marquage lenticulaire qui permet de réaliser des images en 3D avec effets sur le pneumatique.

Dans les exemples des figures 2 ou 3, les protubérances sont des brins 22 ou des lamelles 24. Bien entendu, les modes de réalisations décrits pour ces figures 2 et 3 s'appliquent également au cas où les protubérances sont des parallélépipèdes 26.

L'invention n'est pas limitée aux modes de réalisation et variantes présentées et d'autres modes de réalisation et variantes apparaîtront clairement à l'homme du métier. 1

## Revendications

1. Pneumatique en matériau caoutchoutique comprenant une bande de roulement (12) et deux flancs (14) délimitant ladite bande de roulement (12), au moins un desdits flancs (14) comporte une zone texturée (16) venue de matière avec ledit flanc et faisant contraste avec le reste dudit flanc, ledit flanc comprend au moins un marquage coloré (18), le marquage coloré (18) s'étend sur le flanc du pneumatique, au moins en partie, dans la zone texturée (16), la texture (16) comprend une pluralité d'éléments en protubérance (22, 24, 26) par rapport à un fond de flanc (19) **caractérisé en ce que** tout ou partie des éléments en protubérance de la texture sont des brins (22) répartis dans la texture selon une densité au moins égale à un brin par millimètre carré (mm²), chaque brin ayant une section moyenne comprise entre 0,0005 mm² et 1 mm².

2. Pneumatique selon la revendication 1 **caractérisé en ce que** le marquage coloré (18) s'étend sur le flanc (14) du pneumatique, uniquement dans la zone texturée (16).

3. Pneumatique selon l'une quelconque des revendications 1 ou 2, **caractérisé en ce que** le marquage coloré reste à la surface de la zone texturée.

4. Pneumatique selon l'une quelconque des revendications 1 à 3, **caractérisé en ce que** le marquage coloré (18) pénètre dans la zone texturée.

5. Pneumatique selon la revendication 3, **caractérisé en ce que** le marquage coloré (18) est un autocollant ou un film de couleur.

6. Pneumatique selon la revendication 4, **caractérisé en ce que** le marquage coloré (18) est réalisé par une dépose d'une peinture sur le flanc.

7. Pneumatique selon l'une des revendications 1 à 6, **caractérisé en ce que** partie des éléments en protubérance de la texture sont des lamelles (24) sensiblement parallèles entre elles, le pas des lamelles dans la texture étant au plus égal à 0,5 mm, chaque lamelle ayant une largeur moyenne comprise entre 0,02 mm et 0,25 mm.

8. Pneumatique selon l'une quelconque des revendications 1 à 7, **caractérisé en ce que** partie des éléments en protubérance de la texture sont des parallélépipèdes (26) de côté (C) dont la longueur est comprise entre 0,05 mm et 0,5 mm, de hauteur comprise entre 0,05 mm et 0,5 mm, la distance entre deux parallélépipèdes adjacents dans la texture étant comprise entre 0,05 mm et 0,5 mm. 1

## Patentansprüche

1. Reifen aus Kautschukmaterial, umfassend einen Laufstreifen (12) und zwei Flanken (14), die den Laufstreifen (12) begrenzen, wobei mindestens eine der Flanken (14) einen mit der Flanke materialeinheitlichen und mit dem Rest der Flanke kontrastierenden texturierten Bereich (16) beinhaltet, wobei die Flanke mindestens eine farbige Markierung (18) umfasst, wobei sich die farbige Markierung (18) auf der Flanke des Reifens, mindestens teilweise, in dem texturierten Bereich (16) erstreckt, wobei die Textur (16) eine Mehrzahl von in Bezug auf einen Flankenboden (19) erhabenen Elementen (22, 24, 26) umfasst, **dadurch gekennzeichnet, dass** alle oder ein Teil der erhabenen Elemente der Textur Fäden (22) sind, die in der Textur mit einer Dichte von mindestens einem Faden je Quadratmillimeter (mm²) verteilt sind, wobei jeder Faden einen mittleren Querschnitt zwischen 0,0005 mm² und 1 mm² hat.

2. Reifen nach Anspruch 1, **dadurch gekennzeichnet, dass** sich die farbige Markierung (18) auf der Flanke (14) des Reifens nur in dem texturierten Bereich (16) erstreckt.

3. Reifen nach einem der Ansprüche 1 oder 2, **dadurch gekennzeichnet, dass** die farbige Markierung an der Oberfläche des texturierten Bereichs bleibt.

4. Reifen nach einem der Ansprüche 1 bis 3, **dadurch gekennzeichnet, dass** die farbige Markierung (18) in den texturierten Bereich eindringt.

5. Reifen nach Anspruch 3, **dadurch gekennzeichnet, dass** die farbige Markierung (18) ein Aufkleber oder ein Farbfilm ist.

6. Reifen nach Anspruch 4, **dadurch gekennzeichnet, dass** die farbige Markierung (18) durch ein Aufbringen eines Anstrichstoffs auf die Flanke ausgeführt ist.

7. Reifen nach einem der Ansprüche 1 bis 6, **dadurch gekennzeichnet, dass** ein Teil der erhabenen Elemente der Textur Lamellen (24) sind, die im Wesentlichen parallel zueinander sind, wobei die Schrittweite der Lamellen in der Textur höchstens 0,5 mm beträgt, wobei jede Lamelle eine mittlere Breite zwischen 0,02 mm und 0,25 mm hat.

8. Reifen nach einem der Ansprüche 1 bis 7, **dadurch gekennzeichnet, dass** ein Teil der erhabenen Elemente Quader (26) mit einer Kantenlänge (C), deren Länge zwischen 0,05 mm und 0,5 mm beträgt, mit einer Höhe zwischen 0,05 mm und 0,5 mm sind, wobei der Abstand zwischen zwei benachbarten Quadern in der Textur zwischen 0,05 mm und 0,5 mm beträgt.

## Claims

1. A tyre of rubber material comprising a tread (12) and two sidewalls (14) defining said tread (12),
at least one of said sidewalls (14) comprising a textured area (16) integral with said sidewall and contrasting with the rest of said sidewall, said sidewall comprising at least one coloured marking (18)
the coloured marking (18) extending over the tyre sidewall, at least in part, into the textured area (16),
the texture (16) comprising a plurality of protruding elements (22, 24, 26) relative to a sidewall bottom (19),
**characterised in that** at least some of the protruding elements of the texture are strands (22) distributed in the texture at a density of at least one strand per square millimetre (mm²), each strand having an average cross-sectional area between 0.0005 mm² and 1 mm².

2. A tyre as claimed in claim 1, **characterised in that** the coloured marking (18) extends over the sidewall (14) of the tyre only in the textured area (16).

3. A tyre according to any one of claims 1 or 2, **characterised in that** the coloured marking remains on the surface of the textured area.

4. A tyre according to any one of claims 1 to 3, **characterised in that** the coloured marking (18) penetrates the textured area.

5. The tyre according to claim 3, **characterised in that** the coloured marking (18) is a coloured sticker or film.

6. The tyre according to claim 4, **characterised in that** the coloured marking (18) is produced by applying a paint to the sidewall.

7. A tyre according to one of claims 1 to 6, **characterised in that** at least some of the protruding elements of the texture are sipes (24) substantially parallel to each other, the pitch of the sipes in the texture being at most equal to 0.5 mm, each sipe having an average width of between 0.02 mm and 0.25 mm.

8. A tyre according to any one of claims 1 to 7, **characterised in that** at least some of the protruding elements of the texture are parallelepipeds (26) with a side (C) whose length is between 0.05 mm and 0.5 mm, with a height between 0.05 mm and 0.5 mm, the distance between two adjacent parallelepipeds in the texture being between 0.05 mm and 0.5 mm.]
